Europäisches Patentamt

European Patent Office

Office européen des brevets

(19)

(11) Numéro de publication: **0 426 589 A1**

## (12) DEMANDE DE BREVET EUROPEEN

(21) Numéro de dépôt: **90440093.4**

(22) Date de dépôt: **31.10.90**

(51) Int. Cl.⁵: **B60F 1/04**, B62D 53/06

(30) Priorité: **31.10.89 FR 8914480**

(43) Date de publication de la demande:
**08.05.91 Bulletin 91/19**

(84) Etats contractants désignés:
**AT BE DE ES GB IT NL**

(71) Demandeur: **LOHR INDUSTRIE**
**29, rue du 14 Juillet**
**F-67980 Hangenbieten(FR)**

(72) Inventeur: **Galand, Michel**
**5 quai Lezay Marnésia**
**F-67000 Strasbourg(FR)**

(74) Mandataire: **Metz, Paul**
**Cabinet METZ PATNI 63, rue de la Ganzau**
**F-67100 Strasbourg(FR)**

(54) **Remorque routière porte-engins convertible en wagon.**

(57) Remorque routière à bras de liaison dit en col de cygne décroché, notamment pour engins lourds, caractérisée en ce que la flèche (17) du bras de liaison en col de cygne décroché, est réalisée repliable et est conformée dans sa partie supérieure, selon une forme d'appui (20) en saillie, destinée à venir reposer à immobilisation sur la structure porteuse supérieure (35) du boggie avant (27) et en ce que les rampes arrière (7 et 8) présentent des articulations de pivotement verrouillables en position horizontale, de manière à réaliser la prolongation de structure venant porter sur la structure supérieure du boggie arrière.

Cette invention intéresse les fabricants de matériel routier porteur lourd.

FIG.3

La présente invention se rapporte à une remorque routière porte-engins convertible en wagon.

Plus particulièrement, l'invention concerne une remorque du type semi-remorque pour engins lourds tels que engins de travaux publics, machines agricoles, chars...

La liaison articulée avec le véhicule tracteur de ce type de remorque se présente sous la forme d'un bras de liaison incurvé et de grandes dimensions appelé classiquement col de cygne.

Ce bras est de grandes dimensions en raison des efforts importants transmis au véhicule tracteur par le poids de l'engin transporté. Plus particulièrement, il est incurvé pour permettre un débattement suffisant sur terrains accidentés ou lors du franchissement de dénivellations ou autres reliefs de terrain.

De ce fait et traditionnellement, ce bras de liaison avec le véhicule tracteur est appelé col de cygne décroché.

Afin de permettre l'accès sur le plateau porteur, la remorque présente classiquement à l'arrière des rampes d'accès rabattables pour chaque ligne de roulage des engins transportés.

Pour les mêmes nécessités de résistance mécanique, ces rampes sont lourdes et résistantes.

Pour des raisons d'exploitation , et notamment d'économie de transport en phase de livraison ou de transit entre deux utilisations, il est apparu souhaitable, voire nécessaire de pouvoir transformer rapidement de telles remorques routières en wagon afin de leur permettre d'emprunter les voies ferrées et de bénéficier de tous les avantages du transport ferroviaire.

La présente invention a précisément pour but de rendre convertible en wagon les remorques routières pour engins et matériel roulant lourds, telles que celles visées, notamment ci-dessus.

La difficulté vaincue par l'invention porte précisément sur la transformation en wagon par l'utilisation unique de moyens simples tout en conservant et en employant les structures et les dispositifs prévus classiquement sur les plateaux supérieurs des boggies.

A cet effet, la présente invention se rapporte à une remorque routière convertible en wagon caractérisée en ce que la flèche du bras de liaison entre la remorque et le tracteur présente une partie avant rabattable et, sur sa face supérieure, une forme ou une pièce d'appui venant se verrouiller sur la structure porteuse supérieure du boggie avant et en ce que les rampes d'accès arrière sont immobilisées en position horizontale sur la structure porteuse supérieure du boggie arrière.

De nombreux avantages découlent de la remorque convertible selon l'invention tels que ceux mentionnés ci-dessous :

. avantages multiples d'exploitation en évitant les inconvénients des transports routiers exceptionnels et en bénéficiant de la rapidité et des qualités du transport ferroviaire ;

. conversion simple et rapide ne nécessitant pas de moyen(s) extérieur(s) de levage ni de manutention ;

. travaux de transformation mécanique de la remorque ne présentant aucune difficulté technique ;

. simplicité des moyens d'adaptation qui ne comportent aucune pièce détachée intermédiaire ou de liaison.

Les caractéristiques techniques et d'autres avantages de l'invention sont consignés dans la description qui suit, effectuée à titre d'exemple non limitatif sur un mode d'exécution en référence aux dessins accompagnants dans lesquels :

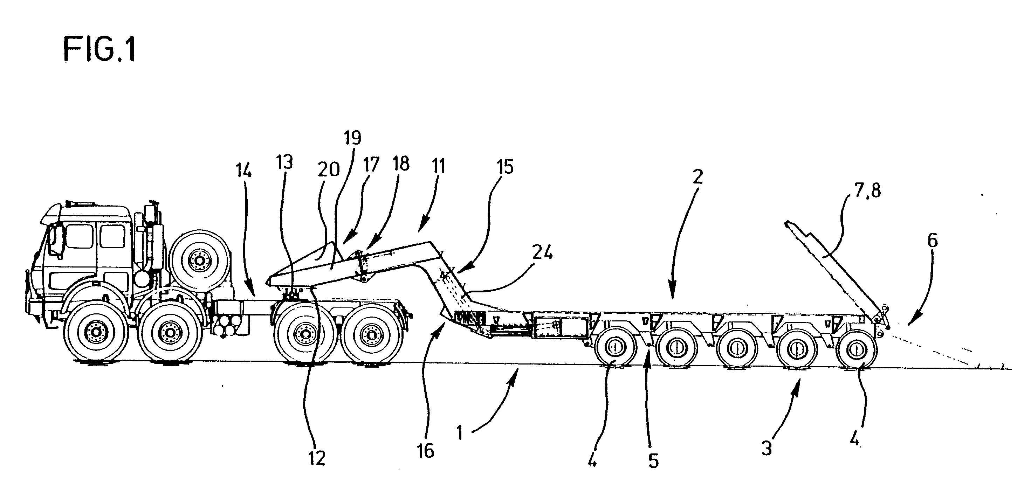

. la figure 1 est une vue de profil de la remorque selon l'invention dans sa configuration routière ;

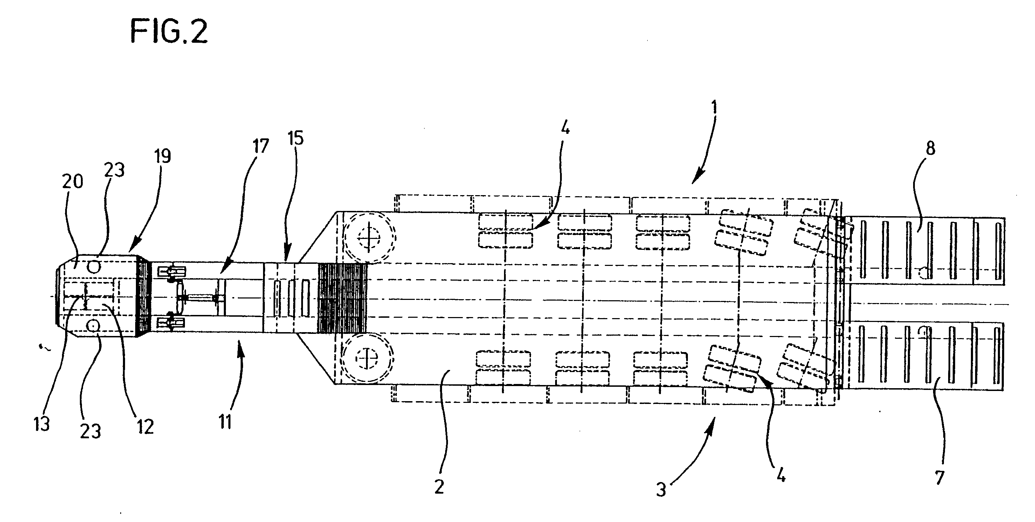

. la figure 2 est une vue en plan de la remorque selon l'invention dans la configuration de la figure 1 ;

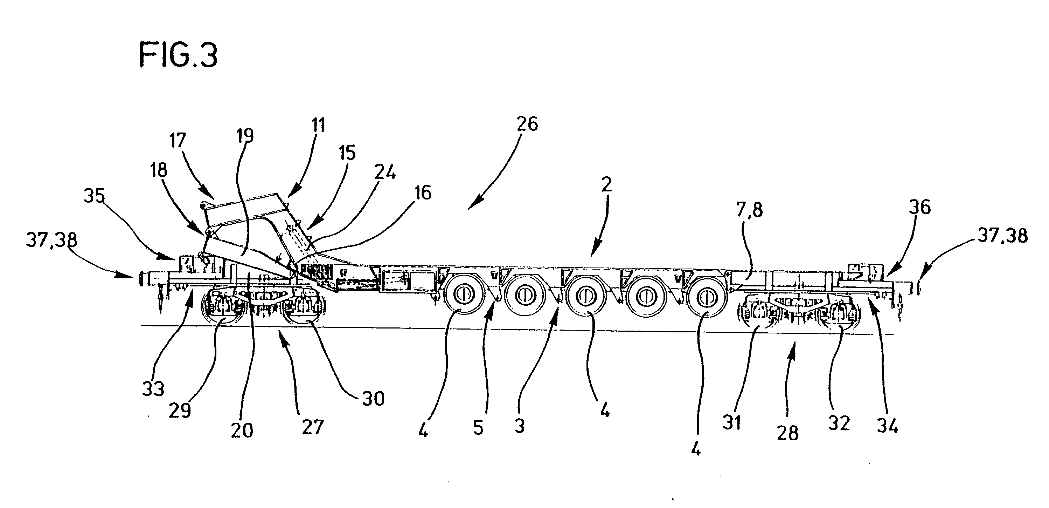

. la figure 3 est une vue de profil de la remorque selon l'invention dans sa configuration de chemin de fer ;

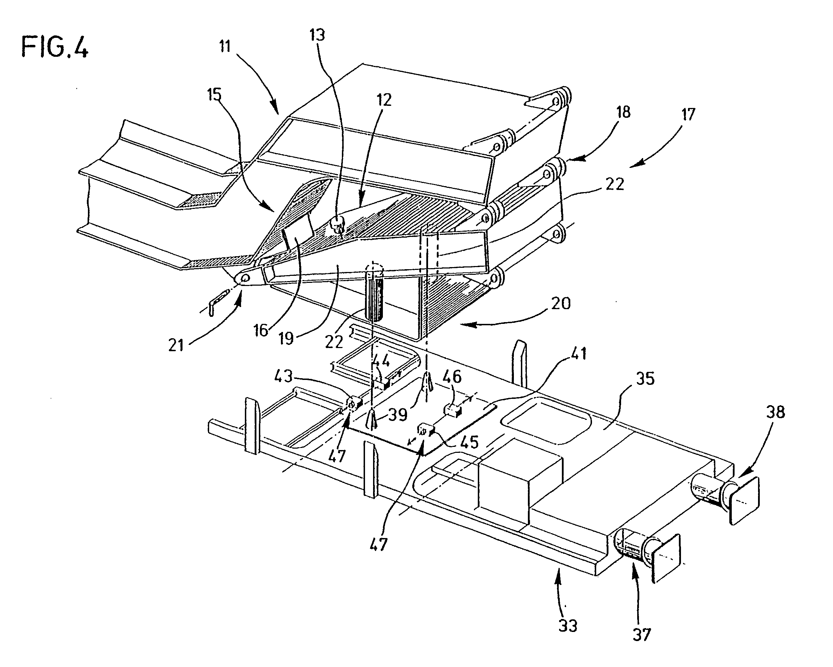

. la figure 4 est une vue en perspective simplifiée du boggie avant, remorque en attente de solidarisation ;

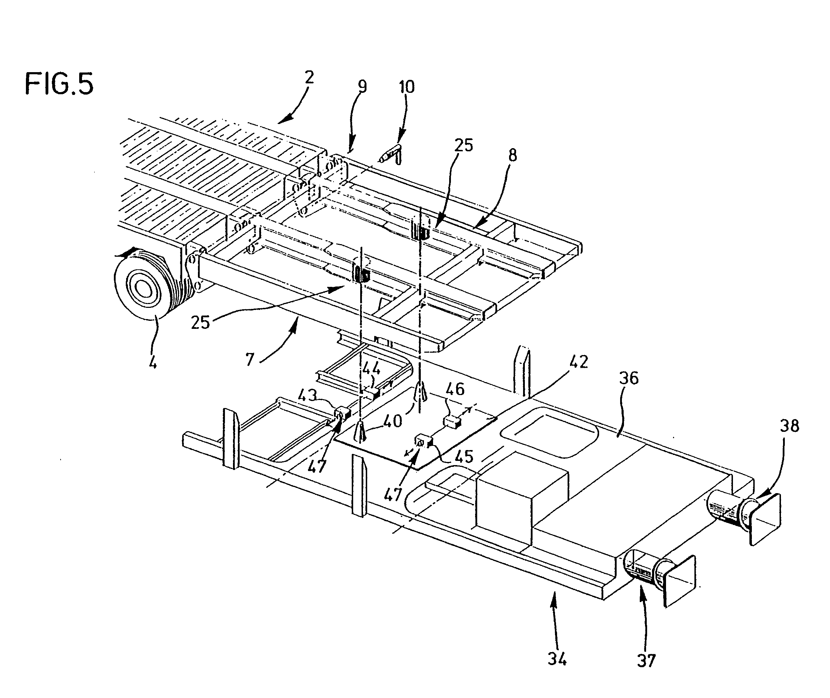

. la figure 5 est une vue en perspective simplifiée du boggie arrière, remorque en attente de solidarisation.

On décrira ci-après le cas d'une remorque routière porte-engins.

Bien entendu, l'invention se rapporte à divers autres types de remorques dès lors qu'il s'agit de la même solution technique que celle apportée par l'invention.

A cet effet, l'idée générale inventive consiste à fractionner par une articulation de pivotement la partie avant du bras porteur de la liaison mécanique de la remorque au véhicule tracteur de manière à la rendre rabattable vers le bas et à verrouiller les rampes arrière d'accès en position horizontale afin de réaliser avec les éléments de la remorque la liaison mécanique avec la structure porteuse du boggie avant et du boggie arrière.

Elle consiste également à adjoindre une pièce saillante d'appui adaptée pour venir s'immobiliser sur la structure supérieure porteuse du boggie avant ou à conformer de façon équivalente le profil de l'extrémité du bras de liaison.

Une remorque 1, par exemple porte-engins, notamment de grande puissance et lourds tels que chars, engins de travaux publics, machines agricoles ou autres comprend une plate-forme 2 portée par un train 3 par exemple de cinq roues jumelées indépendantes telles que 4, par l'intermédiaire d'une suspension hydraulique ou pneumatique 5 à grand débattement permettant d'escamoter complètement le train de roues dans une position portée et également de relever la plate-forme porteuse de la remorque en position haute lors de la conversion en wagon.

Si le débattement de cette suspension ne permet pas d'atteindre le niveau nécessaire pour la plateforme, cette fonction sera assurée par au moins une béquille télescopique à l'arrière.

La remorque 1 présente à l'arrière un passage d'accès 6 formé classiquement de deux rampes inclinées 7 et 8 pour chaque ligne de roulage. Ces rampes sont rabattables chacune d'une position d'accès à une position escamotée par une articulation à pivotement 9 par laquelle elles sont reliées à l'arrière de la plate-forme 2.

Selon l'une des caractéristiques de l'invention, ces rampes sont réalisées verrouillables en position horizontale dans le prolongement du plan de la plate-forme 2 par l'intermédiaire d'un verrou de rampe, par exemple une immobilisation par goupille ou broche 10.

On peut envisager d'autres moyens d'immobilisation par verrouillage, par exemple un verrou à encliquetage.

Selon la présente invention, les rampes présentent une forme générale technique adaptée à venir s'immobiliser sur la structure supérieure porteuse de chaque boggie. Elles présentent en extrémité un décrochement facilitant son contact oblique avec le sol.

La remorque présente à l'avant un bras de liaison 11 avec le véhicule tracteur appelé classiquement col de cygne, comportant en extrémité un appui 12 de sellette portant une cheville ouvrière 13 coopérant avec une sellette 14 prévue sur le véhicule tracteur en vue de transmettre les efforts de traction.

Ce bras, conformément aux caractéristiques de ce type de remorque, est dit à col de cygne décroché en raison de sa forme particulière laissant un dégagement important à l'arrière du véhicule tracteur.

Le bras de liaison articulé se compose d'un montant oblique 15 dont la sous-face est équipée d'une pièce oblique de butée et d'appui 16, montant suivi d'une flèche 17 dont l'extrémité est reliée au tracteur, comme indiqué ci-dessus.

Conformément à l'invention, la flèche 17 du bras de liaison 11 est réalisée repliable par l'intermédiaire d'une articulation de repliage, par exemple à pivotement 18, verrouillable en position d'alignement, permettant de rabattre son extrémité libre 19 vers le bas.

L'extrémité rabattable 19 est conformée en partie supérieure selon une structure saillante de forme générale prismatique jouant le rôle de pièce d'appui 20 ou comporte une pièce d'appui rapportée, équivalente, pour son immobilisation sur la structure porteuse au-dessus du boggie avant.

L'extrémité rabattable comporte à sa pointe ou au niveau de celle-ci un moyen de solidarisation rapide 21 venant se verrouiller sur la base du montant 15 ou sur la pièce de butée et d'appui 16 (figure 4).

Ce moyen peut être du type à broche ou à axe amovible dans une articulation de pivotement ou le moyen connu sous le nom de "twist lock".

Plus particulièrement, la forme ou la pièce d'appui 20 comporte des passages circulaires ou cylindriques 22 aptes à venir coopérer avec des cônes de centrage prévus sur la structure supérieure porteuse du boggie avant en vue de l'immobilisation latérale.

Elle comporte également une bordure longitudinale double 23 formée de deux bords longitudinaux constituant des surfaces d'appui pour des, moyens de blocage, comme on le verra ci-après.

En position repliée, l'extrémité rabattable 19 vient s'immobiliser par sa forme ou pièce d'appui 20 sur la structure supérieure porteuse du boggie et caler sur la pièce de butée, puis se verrouiller au montant oblique 15 par l'intermédiaire du moyen de solidarisation rapide 21 pour réaliser ainsi une immobilisation par encastrement et constituer un bloc de bonne cohésion mécanique.

Le montant oblique 15 loge, dans sa base et au droit de son raccordement avec la plate-forme 2 de la remorque 1, une béquille télescopique escamotable 24, par exemple hydraulique, utilisée comme point d'appui avant, lors de la phase de conversion qui sera décrite ci-après.

Selon une des caractéristiques supplémentaires de l'invention, chaque rampe arrière 7 ou 8 comporte au moins un passage circulaire ou cylindrique tel que 25, apte à venir coopérer avec les cônes de centrage prévus sur la structure supérieure porteuse du boggie arrière.

On décrira maintenant en référence aux figures 4 et 5 les organes porteurs avant et arrière permettant de constituer un wagon 26 avec une remorque routière porte-engins.

Il s'agit de deux boggies avant 27 et arrière 28 comportant chacun des essieux porteurs 29, 30, 31 et 32 (figure 3) et un châssis respectivement 33 et 34 formant en partie supérieure une structure supérieure porteuse respectivement 35 et 36 terminée vers l'extérieur par des tampons 37, 38.

Chaque structure porteuse est équipée d'au moins deux cônes de centrage tels que 39 et 40 et d'un dispositif central d'immobilisation tel que respectivement 41 et 42 par l'intermédiaire de plots 43, 44, 45, 46 présentant chacun une tige transversale de blocage telle que 47 mobile transversalement entre une position retractée de repos et une position, sortie de blocage dans laquelle elle constitue une butée verticale pour les bords ou les contours de la forme ou de la pièce d'appui 20 ou des pièces adjacentes ou cour les longerons formant les rampes d'accès 7 et 8.

Ces tiges peuvent être actionnées par l'intermédiaire d'un mécanisme commun. Elles assurent, avec les cônes de centrage, une immobilisation suffisante des extrémités de la remorque avec les boggies pour constituer un wagon présentant toutes les garanties de cohésion pour le transport ferroviaire.

Les cônes de centrage remplissent une double fonction. Ils assurent d'abord le centrage latéral et longitudinal lors de la pose, mais également la transmission de l'effort de traction à la remorque et au boggie arrière.

Comme déjà indiqué, si le débattement de suspension est insuffisant, la remorque comprendra au moins une béquille télescopique à l'arrière (non représentée).

On décrira ci-après une phase de conversion entre une configuration routière et son état de wagon.

La remorque est amenée par le tracteur sur les rails et mise en place entre un boggie avant et un boggie arrière. On procède ensuite aux opérations suivantes : on actionne la suspension en position haute. On libère le verrouillage de la liaison articulée avec le tracteur. On sort la béquille d'appui avant de son logement et on l'actionne en extension pour dégager le bras de liaison du tracteur.

Le tracteur quitte la zone ferroviaire, abandonnant la remorque entre les boggies.

Ensuite, on verrouille en position horizontale chaque rampe de chargement arrière.

On déverrouille puis on rabat vers le bas la partie avant de la flèche du col de cygne et on la verrouille dans cette position sur la pièce oblique de butée à la base du montant du bras de liaison par le moyen de verrouillage rapide 21 existant.

On présente un boggie à l'éxtrémité arrière de la remorque. On incline la plate-forme de la remorque vers l'avant par rétraction de la béquille d'appui. L'arrière soulevé, laisse suffisamment d'espace au boggie qui est amené exactement sous les rampes. On ajuste ensuite en position pour que les cônes de centrage se trouvent exactement en face des passages circulaires ou cylindriques prévus dans chaque rampe.

On soulage la suspension en ramenant les roues en position escamotée ou on rétracte les béquilles arrière afin de solidariser les rampes du boggie arrière par le déplacement des tiges 47.

On actionne la béquille d'appui avant pour relever l'avant de la remorque. On présente les cônes de centrage de la structure porteuse du boggie avant exactement sous les lumières ou passages prévus dans la pièce prismatique de calage.

On abaisse ensuite le niveau par rétraction de la béquille avant que l'on escamote à l'intérieur de son logement. On solidarise l'avant de la remorque au boggie avant par le déplacement des tiges 47.

La remorque, ainsi immobilisée et verrouillée par ses deux extrémités sur l'un et l'autre boggie, fait corps avec eux pour constituer un wagon de cohésion suffisante pour remplir les conditions de circulation ferroviaire.

L'invention a été décrite ci-dessus en détail. Il est bien entendu cependant que diverses modifications simples, adjonctions, variantes directes, substitutions par des moyens équivalents entrent dans le cadre de la présente protection.

## Revendications

1. Remorque routière à bras de liaison (11) avec le véhicule tracteur, dit col de cygne, présentant un montant oblique (15) suivi d'une flèche (17) dont l'extrémité avant comporte une sous face d'appui de sellette, remorque à béquille télescopique escamotable (24) logée dans le montant du bras de liaison et à rampes d'accès arrière (7 et 8), caractérisée en ce que la flèche (17) du bras de liaison (11) est réalisée repliable et est conformée sur sa partie supérieure, selon une forme d'appui (20) en saillie, destinée à venir s'immobiliser sur une structure porteuse supérieure (35) d'un boggie avant (27) et en ce que les rampes d'accès arrière (7 et 8) présentent chacune une articulation de pivotement verrouillable en position horizontale, de manière à réaliser la prolongation de structure venant porter sur la structure porteuse supérieure du boggie arrière.

2. Remorque selon la revendication 1, caractérisée en ce que la forme d'appui (20) est une pièce rapportée.

3. Remorque selon la revendication 1, caractérisée en ce que la pièce d'appui (20) comporte des passages (22) pour son immobilisation sur des cônes de centrage (39) équipant la structure supérieure porteuse (35) du boggie avant (27).

4. Remorque selon les revendications précédentes, caractérisée en ce que chaque rampe arrière d'accès (7 ou 8) comporte au moins un passage tel que (25) pour son immobilisation sur les cônes de centrage (40) équipant la structure supérieure porteuse (36) du boggie arrière (28).

5. Remorque selon les revendications précédentes, caractérisée en ce que la sous-face du bras de liaison est équipée d'une pièce oblique de butée (16) et en ce que la sous-face de l'extrémité de la flèche (17) possède un moyen de solidarisation rapide (21) venant se verrouiller sur la pièce oblique de butée (16).

6. Remorque selon la revendication 1, caractérisée en ce que l'articulation de repliage de la flèche (17) du bras de liaison est une articulation à pivotement (18) verrouillable en position d'alignement.

7. Remorque selon la revendication 3, caractérisée en ce que le verrouillage de l'articulation de repliage s'effectue par une goupille ou une tige transversale.

8. Remorque selon la revendication 1, caractérisée en ce que les articulations de pivotement des rampes arrière sont verrouillables par goupillage transversal.

9. Remorque selon la revendication 1, caractérisé en ce qu'elle possède au moins une béquille télescopique à l'arrière.

FIG.1

# FIG.2

EP 0 426 589 A1

FIG.3

FIG.4

EP 0 426 589 A1

FIG.5

EP 0 426 589 A1

**Office européen
des brevets**

# RAPPORT DE RECHERCHE
# EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 387 566   (CHARLES PITT LTD.)<br>* le document en entier *<br>– – – | 1 | B 60<br>F 1/04<br>B 62 D 53/06 |
| A | EP-A-0 320 420   (INTERMOTRA)<br>* revendication 1; figures 1-15 *<br>– – – | 1,3,4 | |
| A | US-A-2 564 311   (E.RIMAILHO)<br>* colonne 3, lignes 5 - 34; figures 1, 2 *<br>– – – | 1 | |
| A | US-A-4 373 857   (W.GILES)<br>* abrégé; figures 1-3 *<br>– – – | 1 | |
| A | FR-A-2 251 459   (M.BALMAIN)<br>* le document en entier *<br>– – – | 1 | |
| A | DE-A-1 455 753   (PITT TRAILERS LTD.)<br>* le document en entier *<br>– – – – – | 1 | |

| | | | DOMAINES TECHNIQUES RECHERCHES (Int. Cl.5) |
|---|---|---|---|
| | | | B 60 F<br>B 62 D<br>B 61 D<br>B<br>60 P |

Le présent rapport de recherche a été établi pour toutes les revendications

| Lieu de la recherche | Date d'achèvement de la recherche | Examinateur |
|---|---|---|
| La Haye | 07 février 91 | CZAJKOWSKI A.R. |

CATEGORIE DES DOCUMENTS CITES
X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
-------------------------------------------------------------
& : membre de la même famille, document
    correspondant